(19) Europäisches Patentamt
European Patent Office
Office européen des brevets

(11) Numéro de publication: **0 184 244**
**B1**

(12) # FASCICULE DE BREVET EUROPEEN

(45) Date de publication du fascicule du brevet: 04.04.90

(51) Int. Cl.$^5$: C 01 B 33/34

(21) Numéro de dépôt: 85201851.4

(22) Date de dépôt: 12.11.85

(54) **Procédé pour la fabrication de zéolites.**

(30) Priorité: 21.11.84 FR 8417843

(43) Date de publication de la demande:
11.06.86 Bulletin 86/24

(45) Mention de la délivrance du brevet:
04.04.90 Bulletin 90/14

(84) Etats contractants désignés:
AT BE CH DE FR GB IT LI LU NL SE

(56) Documents cités:
EP-A-0 017 013
FR-A-2 392 932

(73) Titulaire: SOLVAY & Cie (Société Anonyme)
Rue du Prince Albert, 33
B-1050 Bruxelles (BE)

(72) Inventeur: Brahm, Jacques
Snoekgracht, 10
B-1850 Grimbergen (BE)
Inventeur: Piette, Paul
Place Constantin Meunier, 13
B-1180 Bruxelles (BE)

(74) Mandataire: Anthoine, Paul
SOLVAY & Cie Département de la Propriété
Industrielle 310, rue de Ransbeek
B-1120 Bruxelles (BE)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 184 244 B1

## Description

L'invention concerne un procédé pour la fabrication de zéolites, dans lequel on mélange un aluminate avec un silicate en milieu aqueux.

Les zéolites sont des aluminosilicates cristallins bien connus pour leurs propriétés catalytiques et leurs propriétés d'échange d'ions (Informations Chimie, No. 76, Octobre 1969, édition et documentation industrielle EDI, "Propriétés catalytiques des zéolites", pages 18 à 87). Elles ont été proposées pour l'adoucissement des eaux et elles trouvent une application intéressante en tant qu'additifs dans des compositions de lavage ou de blanchiment de textiles, telles que des poudres à lessiver (brevet BE—A—813581 Henkel & Cie, GmbH).

Dans les procédés connus de fabrication de zéolites cristallines, notamment les zéolites A, on mélange habituellement un aluminate et un silicate en milieu aqueux (par exemple une solution aqueuse d'aluminate de sodium et une solution aqueuse de silicate de sodium), on soumet le mélange réactionnel à un brassage et on recueille la zéolite qui précipite. Dans ces procédés connus, la cristallisation de la zéolite est généralement précédé e d'un étape transitoire au cours de laquelle il se forme un composé amorphe à l'état d'un gel (brevet DE—C—2640541, colonne 2, lignes 57 à 65; brevet DE—C—2719425, colonne 1, lignes 29 à 34). Les zéolites obtenus par ces procédés connus présentent généralement une granulométrie fine, qui les destine à être utilisées comme additifs adoucissants et comme builders dans des compositions pour le lavage ou le blanchiment de textiles. Elles présentent toutefois le désavantage de contenir généralement une fraction non négligeable d'un composé amorphe et inerte, provenant de l'étape de formation du gel et ne présentant pas les propriétés des agents adoucissants et des builders. On a en outre observé que, lorsque des textiles sont traités dans des bains contenant ces zéolites, des particules de zéolites sont immanquablement retenues emprisonnées dans les mailles ou entre les fibres des textiles, en dépit de rinçages et d'essorages répétés. La rétention de particules de zéolites dans les textiles est un désavantage, car elles nuisent à l'aspect esthétique et à la souplesse des textiles et, dans le cas de vêtements, risquent d'engendrer des allergies épidermiques.

On a aussi proposé un procédé pour la formation de zéolites cristallines A, dans lequel on fait réagir une solution aqueuse d'aluminate de sodium avec une solution aqueuse de silicate de sodium et on règle les conditions opératoires de manière que l'aluminosilicate de sodium qui se forme, précipite directement à l'état cristallin (brevet AT 322511). Selon ce procédé connu, on préchauffe les solutions d'aluminate et de silicate de sodium approximativement à la même température, comprise entre 50 et 100°C, on mélange ensuite les solutions en les soumettant à une agitation interne et on contrôle l'aluminosilicate de sodium qui précipite, de telle manière que dès qu'on perçoit la formation d'un gel, on augmente la température ou la durée de la précipitation et, dès qu'on perçoit la formation de la sodalite, on diminue la température ou la durée de la précipitation. Ce procédé connu présente l'inconvénient d'imposer une surveillance permanente du processus de la précipitation, de manière à réagir dans le sens voulu avec une grande précision, dès que l'on perçoit la formation d'un gel. Il requiert de ce fait un personnel averti et, par voie de conséquence, coûteux. Il ne permet pas, malgré tout, déviter la présence d'aluminosilicate amorphe ou de sodalite parmi la zéolite A.

Dans le document FR—A—2392932 (Rhone-Poulenc Industries), on décrit un procédé pour la fabrication de zéolites cristallines de type 4A, selon lequel on met en oeuvre une solution aqueuse d'aluminate de métal alcalin, que l'on soumet à une circulation continue en circuit fermé, on introduit progressivement une solution aqueuse de silicate de métal alcalin dans la solution d'aluminate en circulation continue, dans des conditions réglées pour qu'il se forme transitoirement un gel qui est ensuite sourmis à un traitement du mûrissage pour la cristallisation. Dans une forme d'exécution de ce procédé connu, la solution de silicate est introduite dans une zone du circuit de la solution d'aluminate, où celle-ci présente une vitesse au moins égale à 0,25 m/s et un débit pondéral au moins égal à cinq fois le débit d'admission de la solution de silicate.

L'invention tend à remédier aux désavantages et inconvénients précités des procédés connus, en fournissant un procédé nouveau qui permet d'obtenir, de manière aisée et économique, des zéolites cristallines A de grande efficacité et pour lesquelles le degré de rétention dans les textiles est réduit.

En conséquence, l'invention concerne un procédé de fabrication de zéolites, selon lequel on met en oeuvre une solution aqueuse d'aluminate de métal alcalin contenant au moins 50% en poids d'eau et présentant un rapport molaire $M_2O:Al_2O_3$ compris entre 1,5 et 5 et une solution aqueuse de silicate de métal alcalin contenant au moins 30% en poids d'eau et présentant un rapport molaire $SiO_2:M_2O$ compris entre 1 et 5, M désignant le métal alcalin, on soumet la solution aqueuse d'aluminate à une circulation continue en circuit fermé, on introduit la solution aqueuse de silicate de métal alcalin progressivement dans une zone du circuit où la solution d'aluminate présente une vitesse au moins égale à 0,25 m/s et un débit pondéral au moins égal à cinq fois le débit d'introduction de la solution de silicate, et on règle les températures des solutions d'aluminate et de silicate, respectivement entre 50 et 100°C et entre 15 et 25°C, de manière à provoquer une cristallisation instantanée d'aluminosilicate de métal alcalin sans formation d'un gel.

Dans le procédé selon l'invention, on entend désigner par zéolites, des composés cristallins hydratés de formule générale

$$(M_2O)_x \cdot Al_2O_3 \cdot (SiO_2)_y \cdot (H_2O)_z$$

dans laquelle:

M désigne un cation de métal alcalin ou d'ammonium,

x, y et z désignent des nombres entiers ou fractionnaires.

L'aluminate et le silicate sont respectivement un aluminate du cation M et un silicate du cation M. Ils peuvent être mis en oeuvre à l'état solide ou à l'état liquide; on préfère les mettre en oeuvre à l'état de solutions aqueuses.

Les solutions aqueuses d'aluminate et de silicate de métal alcalin doivent être mises en oeuvre en quantités réglées pour obtenir un aluminosilicate ayant la composition énoncée ci-dessus. La solution d'aluminate doivent avoir un rapport molaire $M_2O:Al_2O_3$ compris entre 1,5 et 5 et contenir au moins 50% en poids d'eau et la solution de silicate doit avoir un rapport molaire $SiO_2:M_2O$ compris entre 1 et 5 et contenir au moins 30% en poids d'eau.

Dans l'exécution du procédé selon l'invention, le mélange de la solution aqueuse d'aluminate avec la solution aqueuse de silicate est réalisé de manière à éviter que la cristallisation de l'aluminosilicate soit précédée d'une étape transitoire au cours de laquelle il se forme un gel. A cet effet, selon l'invention, on soumet la solution d'aluminate isolément, à une circulation continue en circuit fermé, celui-ci étant conçu pour présenter une zone dans laquelle ladite solution est animée d'une grande vitesse; on introduit l'autre solution progressivement dans la zone susdite et on règle son débit d'introduction de manière que, lorsque les deux solutions entrent en contact l'une avec l'autre, de l'aluminosilicate de métal alcalin cristallise instantanément, sans qu'il y ait une formation transitoire d'un gel amorphe.

Des paramètres importants pour l'exécution du procédé sont, la vitesse de la solution d'aluminate, le débit d'introduction de la solution de silicate et la température des solutions. A cet effect il convient de régler les débits des solutions de telle manière que, dans la zone précitée du circuit fermé, la solution d'aluminate ait une vitesse au moins égale à 0,25 m/s et un débit pondéral au moins égal à cinq fois le débit d'introduction de la solution de silicate. La température de la solution d'aluminate doit être maintenue entre 50 et 100°C et celle de la solution de silicate entre 15 et 25°C.

Dans une forme d'exécution spécialement avantageuse du procédé selon l'invention, on choisit des conditions opératoires telles que, dans la zone d'introduction de la solution de silicate, la solution d'aluminate ait une vitesse comprise entre 0,35 et 2,5 m/s et un débit pondéral compris entre 8 et 12 fois le débit d'introduction de la solution de silicate, la température de la solution d'aluminate étant fixée entre 65 et 80°C.

A l'issue du procédé selon l'invention, on recueille les cristaux de zéolite du milieu réactionnel. Il est souhaitable, selon une forme de réalisation avantageuse du procédé, de soumettre au préalable le milieu réactionnel contenant les cristaux, à un traitement de mûrissage à une température au moins égale et de préférence supérieure à 70°C. Le traitement de mûrissage a pour fonction de provoquer une recristallisation de l'aluminosilicate, pour fournir une zéolite ayant des propriétés améliorées. La durée du mûrissage doit être suffisante pour assurer cette recristallisation; elle dépend de la température et doit être déterminée dans chaque cas particulier.

La zéolite recueillie à l'issue du procédé selon l'invention est hydratée. Elle peut être utilisée telle quelle ou soumise à un traitement de déshydratation partielle ou totale.

Les zéolites obtenues par le procédé selon l'invention sont des zéolites cristallines du type A, de formule générale

$$(M_2O)_x \cdot Al_2O_3 \cdot (SiO_2)_y \cdot (H_2O)_z$$

dans laquelle:

M désigne un cation inorganique sélectionné parmi les métaux alcalins auxquels on associe l'ammonium,

x, y et z désignent des nombres entiers ou fractionnaires.

L'invention s'applique spécialement bien à la fabrication de zéolites A répondant à la formule précitée, dans laquelle:

M désigne le sodium ou le potassium,

x est compris entre 0,7 et 1,2,

y est compris entre 1,3 et 2,3,

z est compris entre 0 et 6.

notamment des zéolites de formule générale

$$0{,}9\text{—}1{,}1Na_2O \cdot Al_2O_3 \cdot 1{,}9\text{—}2{,}1SiO_2 \cdot 4\text{—}5H_2O$$

Les zéolites obtenues au moyen du procédé selon l'invention présentent une grande efficacité en tant qu'agents pour l'adoucissement de l'eau et elles sont spécialement bien adaptées à une utilisation comme builders dans des compositions détergentes.

Lorsqu'elles sont utilisées dans des bains pour le traitement de tissus ou autres textiles, les zéolites obtenues au moyen du procédé selon l'invention présentent, vis-à-vis de celles obtenues par les procédés

antérieurs à l'invention, le grand avantage d'être moins sujettes à la rétention dans les mailles ou entre les fibres des textiles. Les zéolites obtenues au moyen du procédé selon l'invention trouvent de ce fait une application spécialement avantageuse en tant qu'additifs pour des bains ou des compositions pour le lavage ou le blanchiment de textiles, notamment des poudres à lessiver.

Des particularités et détails de l'invention vont ressortir de la description suivante du dessin annexé, qui représente schématiquement une forme de réalisation particulière d'une installation mettant en oeuvre le procédé selon l'invention.

L'installation représentée à la figure unique du dessin annexé comprend une chambre de mélange 1 et un tuyau 2 dont une extrémité débouche dans le fond de la chambre et l'autre dans la partie supérieure de celle-ci. Une pompe 3 est montée sur le tuyau 2; elle a pour fonction d'assurer une circulation continue, à débit réglé, d'un liquide de la chambre 1 à travers le tuyau 2. Le tuyau 2 comporte une zone 4 de section calibrée dans lequel débouche un gicleur disposé à l'extrémité d'un conduit 5 en communication, via une pompe 6, avec une enceinte 7 destinée à contenir un liquide.

Avant de démarrer l'installation pour mettre en oeuvre le procédé selon l'invention, on introduit un volume défini d'une solution aqueuse d'aluminate de sodium dans la chambre 1 et une solution aqueuse de silicate de sodium dans l'enceinte 7. Les compositions respectives des deux solutions et leurs volumes respectifs sont choisis de manière qu'un mélange des deux solutions conduise à la formation d'aluminosilicate de sodium hydraté ayant la composition de la zéolite définie plus haut.

Après avoir introduit les deux solutions dans l'installation, on démarre la pompe 3 de manière à soumettre la solution d'aluminate de sodium à une circulation continue en circuit fermé depuis la chambre 1, à travers le tuyau 2. On démarre ensuite la pompe 6, de manière à injecter progressivement la solution de silicate de sodium dans la zone 4 du tuyau 2. Le débit de la pompe 3 est, par exemple, choisi de manière que la vitesse de passage de la solution d'aluminate dans la zone 4 soit comprise entre 0,50 et 1,0 m/s et le débit de la pompe 6 est, par exemple, choisi de manière à être approximativement égal au dixième du débit de la pompe 3. La zone 4 du tuyau 2 est ainsi le siège d'une cristallisation d'aluminosilicate de sodium. Pendant le fonctionnement de l'installation, on maintient la température dans la chambre 1 entre 70 et 80°C, la solution de silicate de sodium dans l'enceinte 7 étant à température ambiante.

Lorsque la totalité de la solution de silicate de sodium de l'enceinte 7 a été transférée dans la chambre 1, on arrête la pompe 6 et on continue à faire circuler le mélange réactionnel de la chambre 1 à travers le tuyau 2, via la pompe 3, pour provoquer un mûrissage de la zéolite. Pendant cette opération de mûrissage, on maintient la température dans la chambre 1 aux environs de 70°C. A l'issue du traitement de mûrissage, on arrête la pompe 3, on recueille la suspension aqueuse contenue dans la chambre 1 via une vanne de soutirage 8, et on la soumet à une sédimentation et une filtration pour recueillir la zéolite A qui a crystallisé.

L'exemple dont la description va suivre a trait à un essai de fabrication de zéolite A, par mélange de solutions aqueuses de silicate et d'aluminate de sodium. Dans cet essai, les solutions mises en oeuvre avaient les compositions suivantes:

| | |
|---|---|
| solution d'aluminate de sodium | |
| $NaAlO_2$ | 89 g/kg |
| NaOH total | 186 g/kg |
| $H_2O$ | 800 g/kg |
| rapport molaire $Na_2O:Al_2O_3=4,3$ | |
| solution de silicate de sodium: | |
| $SiO_2$ | 264 g/kg |
| $Na_2O$ | 136 g/kg |
| $H_2O$ | 600 g/kg |
| rapport molaire $SiO_2:Na_2O=2,0$ | |

Les quantités mises en oeuvre ont été de 60 kg (ou 48 l) pour la solution d'aluminate de sodium et de 14,8 kg (ou 10 l) pour la solution de silicate de sodium.

On a mis en oeuvre une installation du type de celle schématisée au dessin et décrite plus haut.

A cet effet, les 60 kg de solution d'aluminate de sodium ont été introduits dans la chambre 1 et on a soumis la solution à une circulation continue permanente à travers le tuyau 2, à un débit de 575 l/h. Compte tenu des dimensions du tuyau 2, il en est résulté une vitesse linéaire de 0,64 m/s dans la zone 4 du tuyau. La température dans la chambre 1 a été maintenue en permanence à environ 80°C.

La solution de silicate de sodium, à température ambiante, a été introduite dans la zone 4 du tuyau à raison de 60 l/h.

Après que la totalité de la solution de silicate de sodium ait été introduite dans la zone 4, ce qui a pris dix minutes, on a poursuivi la circulation dans la chambre 1 et le tuyau 2 pendant 2 heures, en y maintenant une température de 70°C. On a ensuite vidangé la chambre et filtré la suspension pour recueillir la zéolite A formée que l'on a séchée.

La zéolite recueillie à l'issue de l'essai contenait 81,2% en poids de matière anhydre. Ses pouvoirs de fixation du calcium et du magnésium se sont révélés être respectivement égaux à 159,0 mg CaO et 47,7 mg MgO par gramme de zéolite anhydre.

La zéolite a été utilisée dans un essai de lavage de tissus pour évaluer son influence sur la formation de dépôts de salissures solides sur les tissus. A cet effet, elle a été incorporée à une poudre à lessiver ayant la composition pondérale suivante:

| | |
|---|---|
| Détergent "Tensaryl SB 90F" (Tensia) | 6,4% |
| Alcool de suif éthoxylé | 2,3% |
| Savon sodique | 2,8% |
| Silicate de sodium | 6,0% |
| Carboxyméthylcellulose | 1,0% |
| Sulfate de sodium | 12,0% |
| Perborate de sodium | 20,0% |
| Sel de sodium de l'acide éthylène diamine tétraacétique | 0,2% |
| Tripolyphosphate de sodium tétrahydraté | 20,0% |
| Zéolite | 20,0% |
| Eau | 8,3% |
| Noir de carbone | 1,0% |

Dans cette composition, le noir de carbone avait pour fonction de simuler un apport de salissures.

L'essai de lavage a été réalisé sur des tissus normalisés en coton blanc, d'une part, et un polyester-coton blanc (65/35%), d'autre part, exempts de salissures, dans une machine à laver de laboratoire dénommée "Terg-o-tometer, modèle 7243", fabriquée par United States Testing Company, Inc. La machine a été alimentée en eau de la ville de Bruxelles additionnée d'eau déminéralisée pour amener son titre à 25 degrés français. Les conditions opératoires du lavage ont été les suivantes:

Quantité d'eau du bain de lavage: 1 l,
Quantité de poudre à lessiver: 6 g,
Quantité de tissus traités: 4 pièces carrées de chaque type de tissus, de 12×12 cm,
Température du bain de lavage: 60°C,
Vitesse de rotation du batteur de la machine: 80 tours par minute.

Les tissus ont été soumis, dans la machine, à plusieurs cycles successifs de lavage, chaque cycle comprenant les étapes consécutives suivantes:

Première étape: remplissage de la machine avec la quantité d'eau nécessaire;
Deuxième étape: dispersion de la poudre à lessiver dans l'eau et homogénéisation du bain;
Troisième étape: introduction des tissus dans la machine et fonctionnement de la machine pendant 30 minutes;
Quatrième étape: extraction des tissus de la machine, rinçage de ceux-ci avec de l'eau à la température ambiante et séchage des tissus tissés.

On a mesuré la réflectance des tissus séchés à la lumière verte avant leur traitement dans la machine et après respectivement un, cinq, dix et quinze cycles de lavage. Une comparaison des réflectances mesurées avant et après un ou plusieurs cycles de lavage permet d'apprécier l'importance des matières solides de la poudre à lessiver, retenues dans les mailles des tissus.

Les résultats des mesures de réflectance sont mentionnés aux tableaux I (dans le cas des tissus en coton) et II (dans le cas des tissus en polyester-coton). Dans ces tableaux, ΔR et σ désignent respectivement la moyenne et l'écart type, sur vingt mesures, de la différence des réflectances des tissus avant et après le lavage.

TABLEAU I

| Nombre de cycles de lavage | ΔR | σ |
|---|---|---|
| 1 | 0,86 | 0,30 |
| 5 | 3,37 | 0,55 |
| 10 | 5,02 | 0,62 |
| 15 | 5,90 | 0,74 |

TABLEAU II

| Nombre de cycles de lavage | ΔR | σ |
|---|---|---|
| 1 | 4,81 | 0,42 |
| 5 | 10,20 | 0,50 |
| 10 | 14,52 | 0,98 |
| 15 | 16,78 | 0,75 |

A titre de comparaison, on a répété les essais de lavage précités avec une zéolite du commerce connue sous la dénomination HAB A40 (Degussa). Les résultats des mesures de réflectance sont consignés aux tableaux III (dans le cas des tissus en coton) et IV (dans le cas des tissus en polyester-coton).

TABLEAU III

| Nombre de cycles de lavage | ΔR | σ |
|---|---|---|
| 1 | 2,33 | 0,59 |
| 5 | 5,99 | 0,81 |
| 10 | 8,32 | 1,71 |
| 15 | 9,69 | 1,47 |

TABLEAU IV

| Nombre de cycles de lavage | ΔR | σ |
|---|---|---|
| 1 | 5,72 | 0,40 |
| 5 | 12,40 | 1,13 |
| 10 | 15,80 | 1,29 |
| 15 | 17,94 | 1,26 |

Une comparaison des mesures de réflectance des tableaux I et II avec respectivement celles des tableaux III et IV montre que la perte de réflectance des tissus traités dans des bains contenant la zéolite obtenue au moyen du procédé selon l'invention (tableaux I et II) est inférieure à celle encourue dans des bains contenant des zéolites antérieures à l'invention.

**Revendications**

1. Procédé de fabrication de zéolites, selon lequel on met en oeuvre une solution aqueuse d'aluminate de métal alcalin que l'on soumet à une circulation continue en circuit fermé et on introduit une solution aqueuse de silicate de métal alcalin progressivement dans une zone du circuit où la solution d'aluminate présente une vitesse au moins égale à 0,25 m/s et un débit pondéral au moins égal à cinq fois le débit d'introduction de la solution de silicate, caractérisé en ce qu'on met en oeuvre une solution aqueuse d'aluminate de métal alcalin contenant au moins 50% en poids d'eau et présentant un rapport molaire $M_2O:Al_2O_3$ compris entre 1,5 et 5 et une solution aqueuse de silicate de métal alcalin contenant au moins 30% en poids d'eau et présentant un rapport molaire $SiO_2:M_2O$ compris entre 1 et 5, M désignant le métal alcalin, et on règle les températures des solutions d'aluminate et de silicate, respectivement entre 50 et 100°C et entre 15 et 25°C, de manière à provoquer une cristallisation instantanée d'aluminosilicate de métal alcalin sans formation transitoire d'un gel.

2. Procédé selon la revendication 1, caractérisé en ce qu'on règle les débits des solutions de manière

que, dans la zone susdite, la solution d'aluminate ait une vitesse comprise entre 0,35 et 2,5 m/s et un débit compris entre 8 et 12 fois le débit d'introduction de l'autre solution.

3. Procédé selon la revendication 1 ou 2, caractérisé en ce qu'après avoir mélangé la totalité des solutions de silicate et d'aluminate, on soumet le milieu réactionnel à un traitement de mûrissage à une température supérieure à 70°C.

**Patentansprüche**

1. Verfahren zur Herstellung von Zeolithen, gemäß dem man eine wäßrige Alkalimetall - Aluminatlösung einsetzt, die man einer kontinuierlichen Zirkulation in einem geschlossen Stromkreis unterziet und man fortschreitend eine wäßrige Alkalimetall - Silikatlösung in eine Zone des Stromkreises einführt, in der die Aluminatlösung eine Geschwindigkeit von wenigstens gleich 0,25 m/s und eine gewichtsmäßige Durchflußleistung von wenigstens gleich der 5-fachen Einführ - Durchflußleistung der Silikatlösung aufweist, dadurch gekennzeichnet, daß man eine wäßrige Alkalimetall - Aluminatlösung, die wenigstens 50 Gew.-% Wasser enthält und ein molares Verhältnis $M_2O:Al_2O_3$ zwischen 1,5 und 5 aufweist und eine wäßrige Alkalimetall - Silikatlösung, die wenigstens 30 Gew.-% Wasser enthält und ein molares Verhältnis $SiO_2:M_2O$ zwischen 1 und 5 aufweist, wobei M das Alkalimetall bedeutet, einsetzt, und man die Temperaturen der Aluminat- und Silikatlösung zwischen 50 und 100°C bzw. zwischen 15 und 25°C einstellt, derart, daß eine plötzliche Kristallisation des Alkalimetall - Aluminosilikats ohne vorübergehende Gebildung hervorgerufen wird.

2. Verfahren nach Anspruch 1, dadurch gekennzeichnet, daß man die Durchflußleistung der Lösungen so regelt, daß in der obengenannten Zone die Aluminatlösung eine Geschwindigkeit zwischen 0,35 und 2,5 m/s und eine Durchflußleistung 8 bis 12 mal so groß wie die Einführ - Durchflußleisting der anderen Lösung aufweist.

3. Verfahren nach Anspruch 1 oder 2, dadurch gekennzeichnet, daß man nach dem Mischen der gesamten Silikat- und Aluminatlösungen des Reaktionsmilieu einer Reifebehandlung bei einer Temperatur höher als 70°C unterzieht.

**Claims**

1. Process for the manufacture of zeolites, in which an aqueous solution of alkali metal aluminate is used, which is subjected to continuous circulation in a closed circuit, and an aqueous solution of alkali metal silicate is progressively introduced into a zone of the circuit in which the aluminate solution has a speed at least equal to 0.25 m/s and a flow rate by weight which is at least equal to five times the flow rate at which the silicate solution is introduced, characterized in that an aqueous solution of alkali metal aluminate is used which contains at least 50% by weight of water and has a molar ratio $M_2O:Al_2O_3$ of between 1.5 and 5, and an aqueous solution of alkali metal silicate containing at least 30% by weight of water and having a molar ratio $SiO_2:M_2O$ of between 1 and 5, where M denotes the alkali metal, and the temperatures of the solutions of aluminate and silicate are respectively regulated between 50 and 100°C and between 15 and 25°C, so as to cause instantaneous crystallisation of alkali metal aluminosilicate without the transitory formation of a gel.

2. Process according to Claim 1, characterized in that the flow rates of the solutions are regulated in such a manner that, in the abovementioned zone, the aluminate solution has a speed of between 0.35 and 2.5 m/s and a flow rate which is between 8 and 12 times the flow rate at which the other solution is introduced.

3. Process according to Claim 1 or 2, characterized in that after having mixed the whole of the silicate and aluminate solutions, the reaction medium is subjected to a ripening treatment at a temperature greater than 70°C.

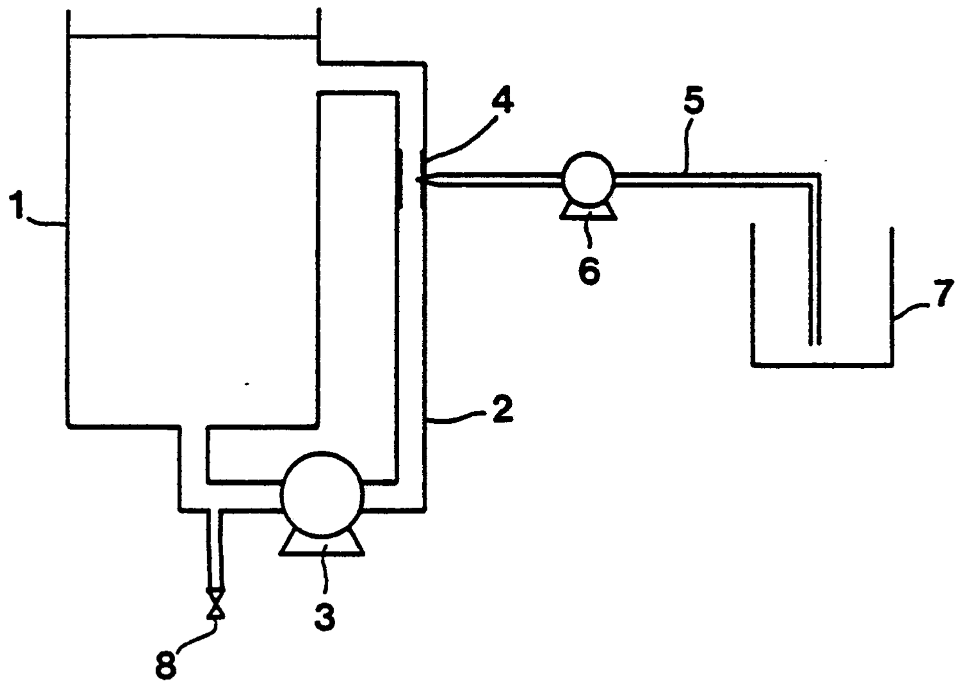
1
2
3
4
5
6
7
8